# EUROPEAN PATENT APPLICATION

(11) **EP 4 667 367 A1**
(43) Date of publication of application: **24.12.2025**
(21) Application number: 24382672.4
(22) Date of filing: 21.06.2024
(51) Int. Cl.: B64U 10/13, B64U 50/19, B64U 50/39, H01M 50/249, H01M 50/213, H01M 10/42, H01M 50/298, H01M 50/509

(54) **INTERCHANGEABLE EXTERNAL BATTERY, BATTERY FASTENING MODULE FOR A ROTOR-POWERED DRONE AND SYSTEM FOR FASTENING AN INTERCHANGEABLE EXTERNAL BATTERY.**

(71) Applicant: Osprean Technologies, S.L., 28033 Madrid (ES)
(72) Inventor: Ramirez Bocanegra, Pedro, 08207 Sabadell, Barcelona (ES)
(74) Representative: Clarke, Modet y Cía., S.L.

(57) **Abstract**

Interchangeable external battery, battery fastening module for a rotor-powered drone and system for fastening an interchangeable external battery. The interchangeable external battery includes a super-toroidal housing with several contained cells and wiring to electrically connect to the outside of the housing. In use, it allows in-flight interchange by another concentric battery of larger or smaller radius that can be located inside or outside the rotors. The battery fastening module includes radially distributed arms defining a central zone for housing the drone body, a pair of perimeter zones, an inner zone for housing a first interchangeable external battery and an outer zone for housing a second interchangeable external battery, such that the first and second batteries are concentric with coupling elements for joining, mechanically and/or electromagnetically, with a complementary coupling element of the batteries, with an electrical connection to power the drone.

## Description

### Technical field of the invention

The invention relates to techniques for increasing the flight range of a rotary wing (propeller) drone.

### State of the Art

In this document, a drone is defined as a manned, unmanned or remotely controlled aircraft propelled by rotors driven by electric motors.

Drones generally include four or more rotors driven by DC (Direct Current) electric motors. These motors are powered by a charged battery inside the drone. The autonomy of drone batteries limits their use to short duration tasks and restricts their applications. For safety reasons, the battery's charge should not be depleted during drone operation. Typically, for longer operations, one or several battery replacements on one or more bases must be scheduled when the battery charge is low, interrupting ongoing operation.

While some drones combine other propulsion systems, such as internal combustion engines or partial battery recharging systems, such as solar panels, the energy of these hybrid systems is ultimately transformed into electrical energy that is transmitted to the electric motors.

Therefore, there is a limitation to using drones without interruption for prolonged tasks.

### Brief description of the invention

Given the challenges and limitations of the State of the Art, an invention is proposed in accordance with the independent claims. Various advantageous implementations are defined in the dependent claims.

One aspect of the invention relates to an externally interchangeable battery for a rotor-powered drone comprising a housing with a super-toroidal geometry, several power cells contained in the housing and the wiring for the electrical connections, either in parallel or series. These cells are electrically connected with a positive connector and a negative connector accessible externally from the housing. In operation, the battery may be located in the inner space between the rotors, or outside the rotors. In either case, it is possible to replace the installed concentric battery in flight with another concentric battery of larger or smaller radius. Optionally, the positive and negative polarity connectors form separated continuous rails separated from each other. Optionally, there is a third magnetic rail to facilitate clamping during the interchange. Optionally, a battery management system can be incorporated to wired or wirelessly communicate battery charge level information. Optionally, there may be one or more coupling elements on the housing to link, mechanically and/or electromagnetically, with a complementary coupling element (of the battery fastening module). Preferably, the housing has axial symmetry.

Another aspect of the invention relates to a battery fastening module for a rotor-powered drone that can be used by either an operations drone or a support drone (to deliver a refresh battery in exchange of a used battery). The battery fastening module can also be static, so installed on a surface, rather than installed on a support drone. The battery fastening module includes radially distributed arms defining a central zone for attachment to the drone body, a pair of perimetric zones, an inner perimetric zone to hold a first interchangeable external battery and an outer perimetric zone to hold a second interchangeable external battery, so that the first and the second battery are concentric (even more perimeter zones can be defined successively). Both perimetric zones have coupling elements to join, mechanically and/or electromagnetically, with a complementary coupling element (of the batteries), where both perimeter zones comprise an electrical connection to power the drone (usually a wiring inside one of the arms to join taking advantage of the electrical connection of the drone with its conventional internal battery). Optionally, the arms are joined by at least one ring which gives it structural robustness. Optionally, it comprises can include a vertical alignment element fixed in the central area (where the drone body is), with a plurality of ribs and/or with the arms themselves. The vertical alignment element has a hollow portion that tapers conically from the inlet, and/or the vertical alignment element comprises a protruding portion. Optionally, there is a distance sensor for measuring the vertical distance from the central area and communicating it to the drone itself. Optionally, the arms can be mechanically coupled to the base of the drone rotors. Optionally, the arms define a plane for locating the interchangeable external batteries. When such a parallel plane is higher, the interchange of a battery is performed from above the drone. Alternatively, when the mentioned parallel plane is lower with respect to the plane containing the drone rotors, the interchange of a battery is performed from below the drone.

An additional aspect of the invention relates to a system attachable to a drone comprising of the battery fastening module and one or two interchangeable external batteries, such that a pair of external batteries can be individually interchanged without loss of power supply.

A final aspect of the invention relates to a drone with the above system.

### Brief description of the figures

In order to complement the description herein and to assist in a better understanding of the features of the invention, a set of drawings is attached hereto as an integral part of the description. In that set of illustrative and non-limiting drawings, the following is depicted:
FIGs. 1A-1G show schematic implementation of two different types of drones with each different corresponding implementations of the battery fastening module.
FIGs. 2A-2D show various implementations of annular batteries externally and internally.
FIGs. 3A-3C show various implementations for the battery fastening module, two implementations serve to interchange batteries from above, another to interchange them from below.
FIG. 4A-4C shows two implementations of a drone battery fastening module for battery interchange from below and from above.
FIG. 5A-5D show different aspects of different implementations of the battery fastening module depending on whether the coupling element is made from above or below, and mechanically or magnetically.
FIGs. 6A-6C show top and bottom views, with and without fastened battery, of a static battery interchanging platform with magnetic coupling.

### Detailed description of the invention

With reference to the figures above, various implementations are explained which should not be considered limiting.

In general terms, the battery interchange manoeuvre refers to the in-flight operation of a drone to interchange a used external battery with a low charge (charged or uncharged battery) for a charged external battery (in the following simply referred to as battery(ies).

For this purpose, first the charged battery is fastened, second the used battery is released.

Depending on the characteristics of the drone and the batteries, a drone may preferably fly with a single battery, until its battery's charge drops below a certain level (e.g. for safety reasons) requiring replacement by a charged battery of different size, so that the charged battery can be fastened without releasing the uncharged battery. In some circumstances it may happen that a drone usually flies with two batteries and the interchange manoeuvre is performed when the charge of one of them drops.

For the interchange manoeuvre, the drone can use a second supporting drone, or a static platform aimed to serve charged batteries and to receive uncharged batteries, e.g. from a drone with an attached battery fastening module.

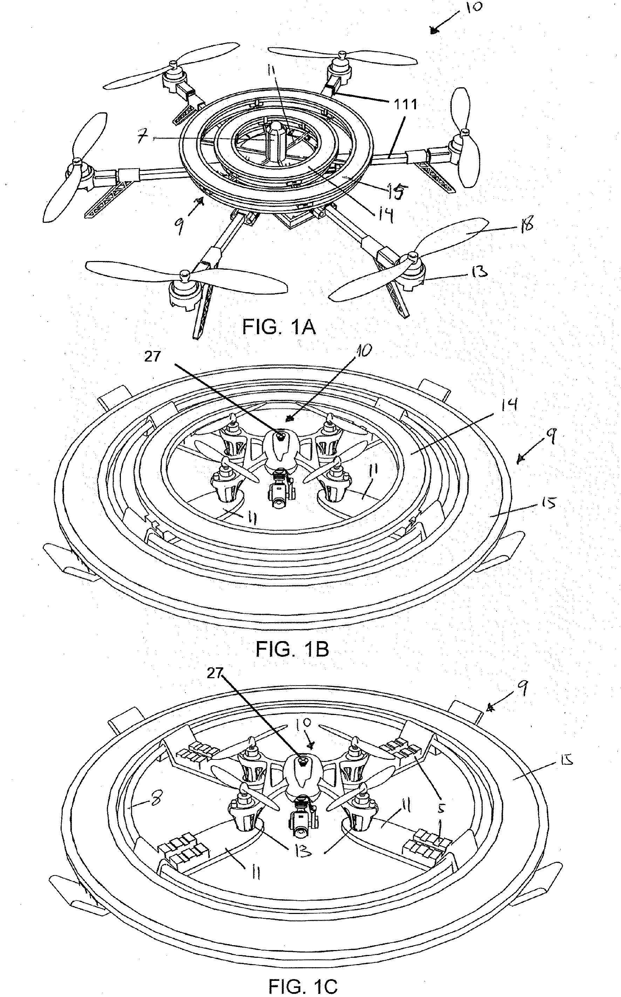

**FIG. 1A** illustrates a six-rotor 13 drone 10 with twin propellers 18, on which is mounted a battery fastening module 9 adapted to carry one or two batteries 14, 15 and to allow the interchange of any one of them. In this implementation, the battery fastening module 9 is mounted internally with respect to the rotors 13 and, approximately, forming the same plane with the propellers. As depicted, the batteries 14, 15 are concentric and of annular geometry and are fastened on the battery fastening module 9, so that the interchange manoeuvre is carried out vertically from above the drone 10. To this end, a vertical alignment element 7 of cylindrical shape is included in the battery fastening module 9. This implementation has the advantage of causing less stability disruptions. The smaller the diameter, the lower the moment of inertia but the lower the battery capacity too. Electrically, the battery fastening module connects the battery 14, 15 with the drone 10. For this purpose, one or more arms 11 may be wired so that electrical power can reach the drone. For this purpose, the drone 10 may include a connector for the battery fastening module on the drone's body 10 or on one of its arms 111, i.e. of the arms 111 connecting the body of the drone 10 with its rotors 13.

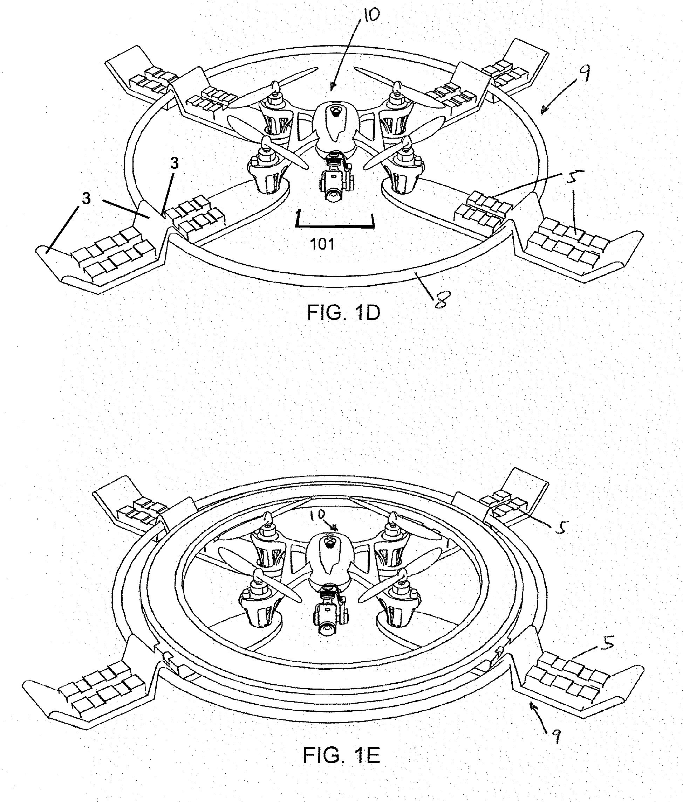

**FIGs. 1B-1E** are described together and illustrate a different implementation of the battery fastening module 9 which is also adapted to carry one battery (see FIG. 1C, FIG. 1E) or two batteries 14, 15 (see FIG. 1B) at a time, allowing the interchange of the low charge battery by a charged one. The drone 10 on which this implementation of the battery fastening module 9 is mounted, it is a drone with four rotors 13 with twin-propellers 18 each, but the configuration could be different.

The four arms 11 of the battery fastening module 9 are attached to the base of the four rotors 13. The rotors 13 form approximately a single plane with the propellers of the rotors 13. As can be clearly appreciated in FIG. 1D, the battery fastening module 9 includes in each arm 11 a coupling element 5 for receiving either or both batteries at the same time. The arms are connected by a ring 8. As can be seen, the batteries 14, 15 are concentric and of annular geometry and are supported by the battery fastening module 9, so that the interchange manoeuvre is performed vertically from above the drone 10 as in FIG. 1A. Electrically, the battery fastening module 9 connects the battery 14, 15 with the drone 10. For this purpose, one or more arms 11 may be wired so that electrical power can reach the drone 10. For this purpose, the drone 10 may include a connector for the battery fastening module 9 in the body 101 of the drone 10.

In this implementation, there is no vertical alignment element 7. Since the batteries 14, 15 are larger in size, it has the advantage that the interchange manoeuvre is simpler. However, there are several horizontal alignment elements 3 which, for this implementation, are formed on each arm 11 as sloping elevations above the area where the coupling elements 5 are located to assist in the interchange manoeuvre, progressively restricting the free range of movement as it moves closer to the position that corresponds to it.

Optionally, the drone 10 may have an alignment mark (see schematic representation in FIG. 1B or 1C) on its top face, indicating the centre of the batteries. This can be used for passive alignment, where the top drone by image recognition would detect that top mark (with distinctive colour or shape) and use it to stay aligned during the interchange.

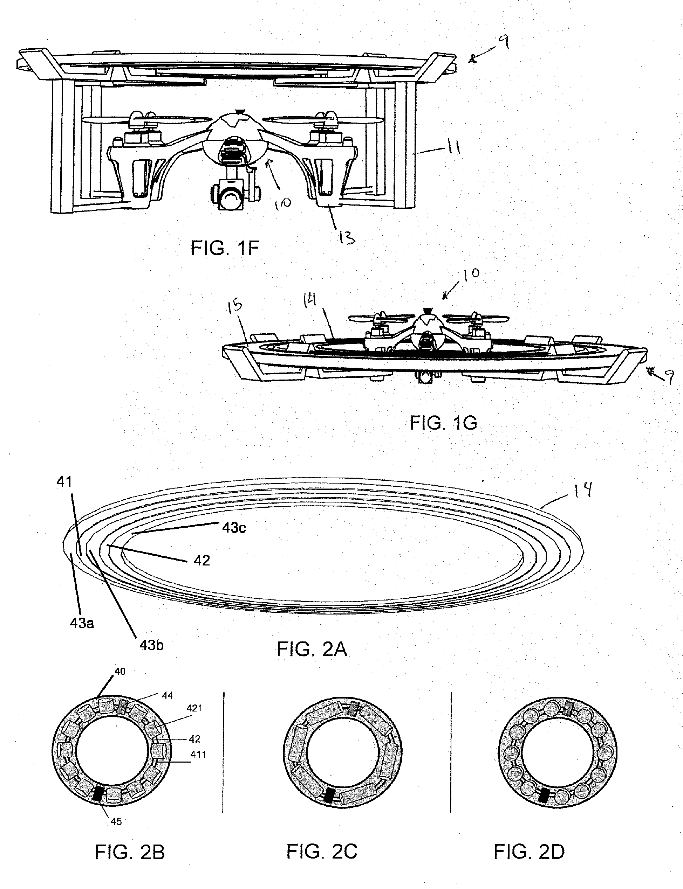

**FIGs. 1F-1G** are described together and illustrate a different implementation of the battery fastening module 9. The fundamental difference from the previous implementation is that the arms 11 attach to the base of the rotors 13 of the drone 10 and connect to the coupling elements 5 for the battery(ies) are not in an approximate same plane with the propellers 18 of the rotors 13. In the FIG. 1F, the arms 11 include a vertical portion to elevate the area where the batteries are fastened, so that the plane formed by the propellers 18 of the rotors 13 is below the battery(ies) plane, providing the advantage of facilitating interchange manoeuvres with a support drone that would operate from above, with greater clearance between the area where the batteries are located and the propellers 18 of the drone 10. In FIG. 1G, on the other hand, the plane formed by the propellers 18 of the rotors 13 is above the area for the batteries and landing is facilitated.

In addition to these implementations, other implementations that are a combination of these implementations are possible. For example, the battery fastening module defines different and parallel battery planes 14, 15, located below the rotors of the drone for a replacement manoeuvre from below. Alternatively, these battery plans 14, 15 can also be located above the rotors. Even in combination, with the battery fastening module defining a first plane for a battery above the rotors and a second plane below the rotors.

**FIGs. 2A-2D** show details describing together several aspects of an implementation of a battery 14 of annular geometry (may be the larger or smaller diameter). FIG. 2A illustrates an exterior view, showing in a housing 40 five concentric, continuous, outer rails, two of which are connectors 41, 42 of different polarity (positive/negative) and electrically isolated from each other. In some implementations, one or more of the remaining rails 43a, 43b, 43c may be magnetic to facilitate coupling with the battery fastening module. FIGs. 2B-2D illustrate various cell 47 associations within the housing 40, a positive polarity wire 411 and a negative polarity wire 421.

The position of the cells in FIGs. 2B and 2C allows for a flatter or thinner battery and is therefore preferable for a configuration as illustrated in FIG. 1G, providing as advantage less wind resistance and greater stability, but less protection to the drone rotors. The position of the cells of FIG. 1D allows for taller or thicker batteries (like a hollow cylinder), making the arms of the battery fastening module as illustrated in FIG. 1F shorter. The battery of FIG. 2D can provide as advantage greater protection to the rotors and to the drone in general in exchange for less favourable aerodynamics.

It should be clarified that other implementations are possible. The geometries of the larger battery casings 40 can be annular super-toroidal (as in the previous examples) or polyhedral. The geometries of the smaller battery casings can be similar to the larger ones, both defining axial symmetry. In some implementations, they may even be compact (i.e., without central void space, e.g., disc-shaped).

The shape of the batteries can be advantageously chosen to suit the tasks to be performed by the drone. In some implementations, it can serve to protect the drone in flight from impacts and collisions, in particular to the rotor propellers. For example, by avoiding collisions with obstacles (e.g. tree branches). The external battery in the drone's support bracket forms a mechanical structure that absorbs shocks and prevents damage to the drone.

For this purpose, the shape of the outer wall of the larger battery casing 40 can be meticulously designed to provide specific advantages. It can be straight or curved and should ideally avoid unwanted moments of force when installed on the drone. Optionally, the outer wall can have a light rail with energy-saving lights. In order to firstly illuminate in any direction from the drone to the outside, and secondly to generate the navigation lights normally installed on aircraft at each wing tip (red and green) and another (white) at the rear to signal the direction of flight

The design can be diverse. Among the various implementations, the larger battery housing may be annular to contain the smaller battery casing if they are placed in the same plane, or if the manoeuvre involves accessing the smaller battery through the larger battery. Conversely, the smaller battery may be non-hollow, for example, with a disc-shaped housing.

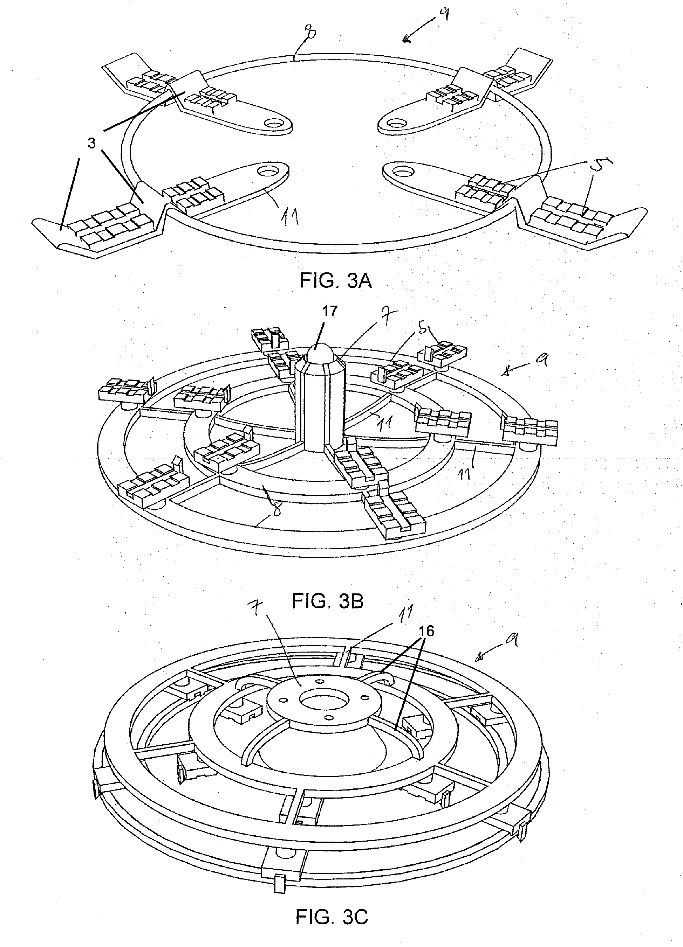

**FIGs. 3A-3C** show together several aspects of three implementations for the battery fastening module 9, here insulated for better appreciation of its components. FIG. 3A shows an implementation with a reduced number of components for a lighter weight (as described in FIGs 1B-1E). At the inner end of each arm 11 is a receptacle for the corresponding rotor base. The four arms are joined by a ring 8 separating the coupling element 5 for the larger battery and the coupling element 5 for the smaller battery. Several horizontal alignment elements 3 are visible on each arm 11, comprising a raised section with a slope over the area where the coupling elements 5 are located. These horizontal alignment elements 3 of different arms 11 cooperate with each other to guide the battery to the corresponding position.

FIG. 3B is an implementation for an interchange from above, with a reinforced structure with two concentric rings 8 connecting the radial arms 11. The coupling elements 5 are distributed around the rings 8 and enable to selectively receive or release one of the batteries (either the larger or the smaller one). To facilitate manoeuvring, the battery fastening module 9 has a vertical alignment element 7 in the form of a cylindrical tower connected to the arms 11. A sensor 17 is installed at the upper end of the vertical alignment element 7. FIG. 3C is a complementary implementation to that of FIG. 3B. That is, the battery fastening module of FIG. 3C serves for a battery interchange from below (see fastened larger battery 15). Similarly, the structure is reinforced with two ring elements 8 concentric with respect to the drone's body, with the rings 9 connecting the arms 11 which are radially distributed. The coupling elements 5 for receiving or releasing a battery are distributed around the rings 8.

The alignment sensor 17 is optional and can be used to complete the geolocation data of the drone 10 for and transmitting the data in case of using a support drone a few centimetres above or below depending on the interchange procedure. It is known that Geolocation data from satellite navigation systems (e.g. GPS) have few centimetres of error. In order to determine the relative position between the drones more precisely, the alignment sensor 17 is used, so possible geolocation errors can be corrected or collated. The sensor on the support drone can be replaced by a camera on the support drone to identify a mark in the centre of the receiving drone (see example element 27 in FIG. 1C). Using image processing and calculating the distance relative to that mark, the manoeuvres are performed in real time. Another option is to use a laser transmitter-receiver sensor pair.

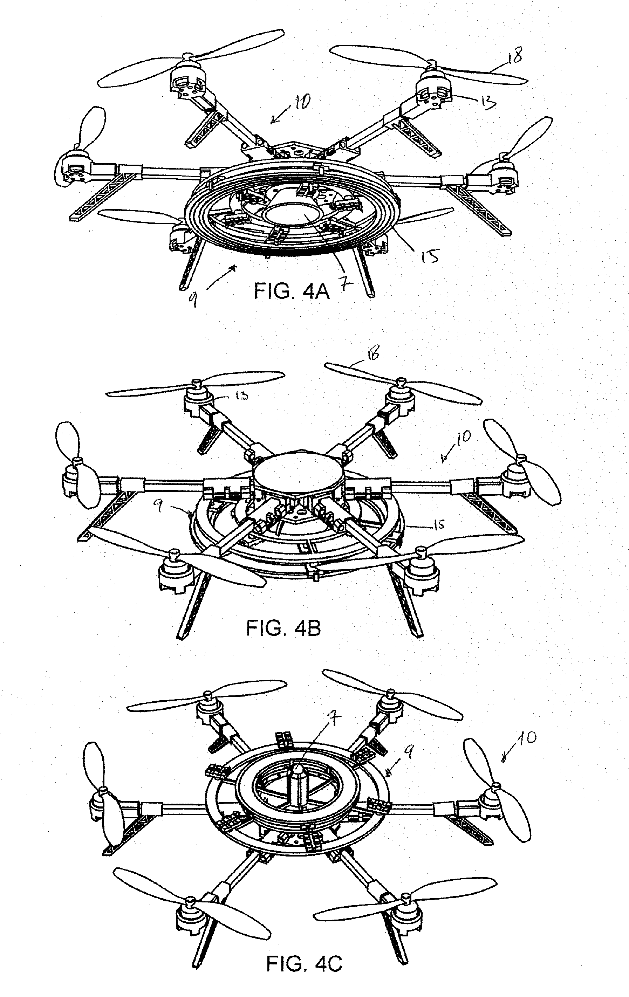

**FIGs. 4A-4C** show two drones each with a different battery fastening module 9 (FIGs. 3A-3C) internally coupled with respect to the rotors 13 of the drone 10. Both battery fastening modules 9 have electrical connections (not shown in this figure) to connect to circular rail-shaped battery electrical connectors (only visible in FIG. 4A) to bring electricity to the motors of the rotors 13. Part of the electronics for managing the battery fastening module including a Battery Management System (BMS) may be inside the hollow reserved in the drone itself for its original battery. It may also be in the battery fastening module 9 (and wired to the drone, for example, with a data bus on one of the rails not used for power).

FIG. 4A illustrates a bottom view and FIG. 4B shows respectively a top view. Both correspond to the same drone 10 with a battery fastening module 9 for battery interchange from below (this drone can be either the operating drone or the support drone that carries the refresh battery and picks up the used battery). The rotors 13 of the drone 10 are external to the battery fastening module, which is attached at the bottom and, at the centre of which, the vertical alignment element 7 is visible in the form of a dome.

Equivalently, FIG. 4C shows a top view of a drone 10 with another battery fastening module 9 for battery interchange from above. This battery fastening module 9 is attached at the top with respect to the drone 10. At the centre of the battery fastening module 9 is the vertical alignment element 7 in dome form. As can be seen, the larger battery 15 is carried by the drone of FIGs. 4A-4B, while the smaller battery 14 is carried by the drone of FIG. 4C. Either of these two drones could act as a support drone if it also has an internal battery to work in the absence of an external battery. Note that the battery used must be different from the replacement charged battery in order to be able to perform the interchange manoeuvre.

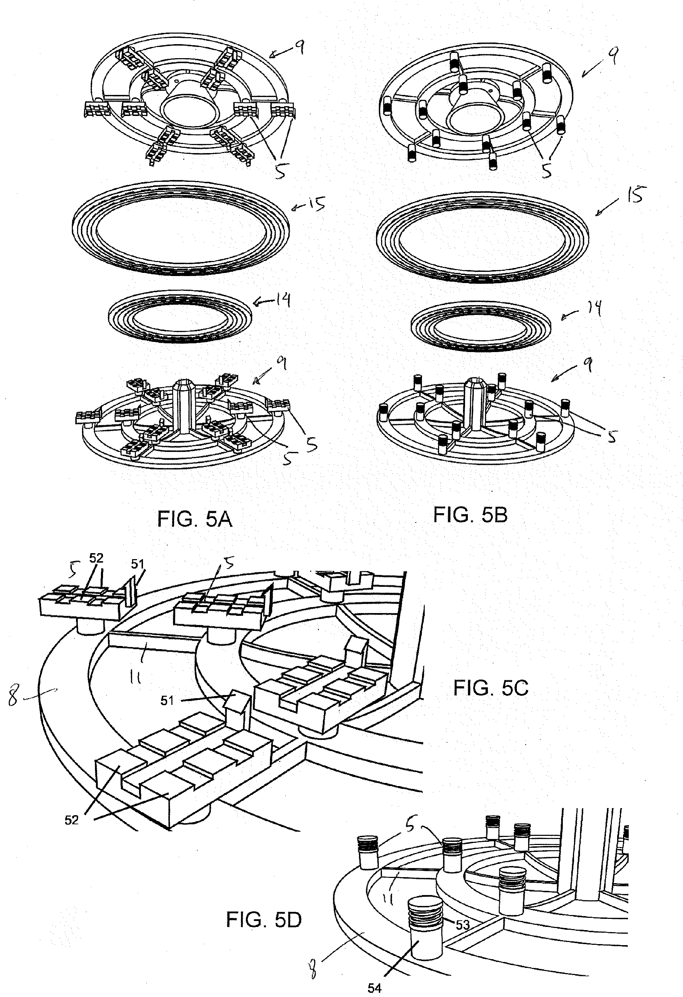

In **FIGs. 5A-5B** show vertically aligned two complementary battery fastening modules (without drone), i.e. for interchange from above and for interchange from below a larger battery 14 and/or a smaller battery 15. Schematically, each battery fastening module 9 at the top allows to selectively uncouple (release) the larger battery 15 or the smaller battery 15 for coupling (fasten) it to the battery fastening module 9 at the bottom. Conversely, each battery fastening module 9 of the lower part allows to selectively uncouple (release) the larger battery 14 or the smaller battery 14 in order to attach (fasten) it to the battery fastening module 9 of the upper part.

**FIGs. 5C-5D****,** illustrate in magnified form the type of coupling element with the battery that differentiates the sequence of images in FIG. 5A and FIG. 5B. That is, the battery fastening module 9 of FIG. 5A employs mechanical (or electromechanical) clamping, with a flange 51 and anchors or fasteners 52. The battery fastening module 9 of FIG. 5A employs magnetic (or electromagnetic) clamping, for example, with an electromagnet 53 attached to a base 54. Both mechanisms are compatible and could coexist in a combined implementation.

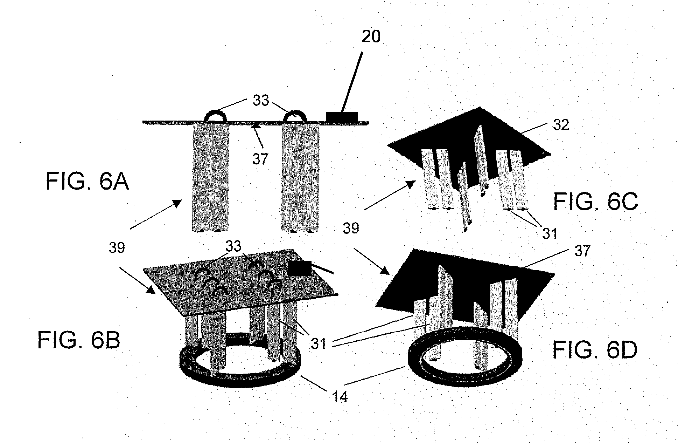

**Figs. 6A-6D** illustrate different views of a platform 39 from which to pick up a charged battery and drop off a used battery 14. The release of a used battery and the battery fastening of a charged battery can be done in different ways. As already explained, a support drone can carry the charged battery and serve to release the used battery (FIGs. 4A-4C). Alternatively, a platform 39 is static can be provided and it can be used by the drone itself to perform the interchange, by manoeuvring to pick up a charged battery and at one externally accessible location of the platform 39 and leave a used battery at another location for recharging. The platform 39 shown can be transportable to dynamically establish different bases on which to carry out the interchange manoeuvre, for this purpose, it has a base 32 with clamps 33 to be hoisted to a given height or alternatively, with legs to be supported on the ground. The platform 39 includes arms 14 projecting from the base of the platform 39 to hold and load a battery 14. There are two sets of arms 31 defining two contours for holding and loading two different sizes of battery (14 ,15). The platform 39 may additionally have a sensor 37 and a communication unit to assist the drone in the interchange manoeuvre. The platform 39 can recharge or simply store used batteries.

## Claims

1. An Interchangeable external battery (14,15) for a drone (10) powered by rotors (13), comprising:
a housing (40) with a super-toroidal geometry;
a plurality of cells (43) contained within the housing (40);
an electrical connection comprising a positive polarity connector accessible from the housing (40) and a negative polarity connector accessible from the housing (40) and wiring for electrically connecting, in parallel or series, the plurality of cells (43) within the housing (40).

2. Interchangeable external battery (14,15) according to claim 1, wherein the positive polarity connector is a first continuous rail (41), and the negative polarity connector is a second continuous rail (42), wherein both rails (41, 42) are separated from each other.

3. Interchangeable external battery (14,15) according to claim 2, wherein the housing (40) comprises a magnetic third rail (43a, 43b, 43c).

4. Interchangeable external battery (14,15) according to claims 1 to 3, further comprising a Battery Management System configured to communicate wired or wirelessly information concerning battery charging status.

5. Interchangeable external battery (14,15) according to any one of claims 1 to 4, comprising a coupling element (5) is configured to join, mechanically and/or electromagnetically, with a complementary coupling element.

6. Interchangeable external battery (14,15) according to any one of claims 1 to 5, wherein the housing (40) has axial symmetry.

7. A battery fastening module (9) for a drone (10) powered by rotors (13), comprising:
a plurality of radially distributed arms (11), where the arms (11) define a central area for housing the body of the drone (10), an inner perimeter area for housing a first interchangeable external battery (14,15) and an outer perimeter area for housing a second interchangeable external battery (14,15), such that the first and second batteries are concentric;
wherein both perimeter zones comprise a plurality of coupling elements (5), wherein each coupling element is configured to link, mechanically and/or electromagnetically, with a complementary coupling element, wherein both perimeter zones comprise an electrical connection to power the drone (10).

8. The battery fastening module (9) according to claim 7, wherein the arms (11) are connected by at least one ring (8).

9. The battery fastening module (9) according to claim 7 or 8, comprising a vertical alignment element (7) fixed in the central area with a plurality of ribs (16) and/or with the arms (11), wherein the vertical alignment element (7) comprises a hollow portion tapering conically from the inlet and/or wherein the vertical alignment element (7) comprises a protruding portion.

10. The battery fastening module (9) according to any one of claims 7 to 9, comprising a distance sensor (17) for measuring the vertical distance from the centre area.

11. The battery fastening module (9) according to any one of claims 7 to 10, wherein arms (11) are configured to mechanically attach to the base of the rotors (13) of the drone (10).

12. The battery fastening module (9) according to any one of claims 7 to 11, wherein the plurality of arms (11) define a plane for locating the interchangeable external batteries (14, 15), being that plane parallel above, so that the interchange of a battery is performed from above the drone (10), or alternatively, being that plane parallel below with respect to the plane containing the rotors (13) of the drone (10), so that the interchange of a battery is performed from below the drone (10).

13. A system for fastening an interchangeable external battery (14, 15) to a drone (10) powered by rotors (13) in flight comprising:
- an interchangeable external battery (14, 15) according to any one of claims 1 to 6;
- a battery fastening module (9) according to any one of claims 7 to 12 for arranging the mentioned interchangeable external battery (14, 15) in a perimetric area such that the interchangeable external battery (14, 15) is electrically connected to the drone (10).

14. System according to claim 13, wherein the super-toroidal geometry of the housing (40) of the battery (14, 15) defines an inner region larger than the operating contour of the rotors (13) of the drone (10), so that the housing (40) acts as a perimetric protection against impacts to the drone (10).

15. System according to claim 13 or 14, wherein, with the battery (14, 15) and the battery fastening module (9) rigidly coupled via the respective coupling elements (5), the electrical connection between the battery (14, 15) and the battery fastening module carries electrical power to the drone (10).

16. System according to any one of claims 13 to 15, comprising a communications unit (20) configured to receive distance sensor information (17) from the battery fastening module (9) and/or external interchange battery charge information (13,14) for transmitting it to the drone processor (10) to perform a flight manoeuvre.

17. A drone (10) powered by rotors (13) comprising a system for fastening an interchangeable external battery (14, 15) in flight according to any one of claims 13 to 16.
